(19) 

Europäisches
Patentamt
European
Patent Office
Office européen
des brevets

(11) **EP 4 116 851 A1**

(12) **EUROPEAN PATENT APPLICATION**
published in accordance with Art. 153(4) EPC

(43) Date of publication:
**11.01.2023 Bulletin 2023/02**

(21) Application number: **21778938.7**

(22) Date of filing: **15.03.2021**

(51) International Patent Classification (IPC):
*G06F 21/57* (2013.01)        *G06F 21/51* (2013.01)

(52) Cooperative Patent Classification (CPC):
**G06F 21/51; G06F 21/57; G06F 21/64**

(86) International application number:
**PCT/CN2021/080810**

(87) International publication number:
**WO 2021/197040 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2020   CN 202010246265**

(71) Applicant: **Huawei Technologies Co., Ltd.
Shenzhen, Guangdong 518129 (CN)**

(72) Inventors:
• **HE, Da
Shenzhen, Guangdong 518129 (CN)**
• **QI, Jie
Shenzhen, Guangdong 518129 (CN)**

(74) Representative: **Gill Jennings & Every LLP
The Broadgate Tower
20 Primrose Street
London EC2A 2ES (GB)**

(54) **TRUSTED MEASUREMENT METHOD AND RELATED APPARATUS**

(57)    A trusted measurement method and a related apparatus are provided. The trusted measurement method includes: obtaining a measurement value of a first measured object in a computing device, where the measurement value of the first measured object is for determining whether a firmware-based first trusted module in the computing device is trusted, and the first trusted module is configured to store a measurement value of a second measured object that is in the computing device (S101); and sending the measurement value of the first measured object to a hardware-based second trusted module (S102). According to the method, security of the computing device may be improved.

Obtain a measurement value of a first measured object in a computing device, where the measurement value of the first measured object is for determining whether a firmware-based first trusted module in the computing device is trusted, and the first trusted module is configured to store a measurement value of a second measured object that is in the computing device — S101

Send the measurement value of the first measured object to a hardware-based second trusted module — S102

FIG. 1

EP 4 116 851 A1

**Description**

This application claims priority to Chinese Patent Application No. 202010246265.5, filed with China National Intellectual Property Administration on March 31, 2020 and entitled "TRUSTED MEASUREMENT METHOD AND RELATED APPARATUS", which is incorporated herein by reference in its entirety.

**TECHNICAL FIELD**

This application relates to the field of information technologies, and in particular, to a trusted measurement method and a related apparatus.

**BACKGROUND**

With rapid development of information technologies, security of a computing device becomes increasingly important.

The security of the computing device may be determined based on a result obtained by measuring integrity of code executed on the computing device and data stored in the computing device. When the code executed on the computing device is trusted code and the data stored in the computing device is trusted data, the computing device is trusted. The code executed on the computing device may be read from the data stored in the computing device and loaded to the computing device for execution. If the data stored in the computing device or the code executed on the computing device is tampered with, in other words, the integrity of the code executed on the computing device and the data stored in the computing device is damaged, the computing device is untrusted.

Currently, the security of the computing device needs to be improved.

**SUMMARY**

This application provides a trusted measurement method and a related apparatus, to improve security of a computing device.

According to a first aspect, this application provides a trusted measurement method. The method includes: obtaining a measurement value of a first measured object in a computing device, where the measurement value of the first measured object is for determining whether a firmware-based first trusted module in the computing device is trusted, and the first trusted module is configured to store a measurement value of a second measured object that is in the computing device; and sending the measurement value of the first measured object to a hardware-based second trusted module.

According to the foregoing method, the measurement value that is of the first measured object and that is for determining whether the first trusted module is trusted is sent to the hardware-based second trusted module, and the second trusted module may store the received measurement value of the first measured object. Because a security protection level for internal data of the hardware-based second trusted module is higher than a security protection level of the firmware-based first trusted module, it is more secure and accurate to determine, by using the measurement value that is of the first measured object and that is stored in the second trusted module, whether the first trusted module is trusted. In this way, security of the computing device may be improved.

In a possible implementation, the first measured object includes at least one of the following: the first trusted module or data in the first trusted module.

In an example, the data in the first trusted module may include at least one of the following: data of the first trusted module, the measurement value of the second measured object, or the like.

In an example, the first measured object may include only the measurement value that is of the second measured object and that is stored in the first trusted module.

In a possible implementation, the measurement value of the second measured object is stored in a first register of the first trusted module through an extend operation; and the measurement value of the first measured object is stored in a second register of the second trusted module through the extend operation.

In a possible implementation, the second trusted module is further configured to store a measurement value of a third measured object, where the third measured object is a measured object that is in the computing device before the first trusted module is started, and the second measured object is a measured object that is in the computing device after the first trusted module is started.

In a possible implementation, the first trusted module runs based on a trusted operating system on the computing device, and the third measured object includes at least one of the following: BIOS code, a boot loader of the computing device, and boot code of the trusted operating system.

In a possible implementation, the measurement value of the third measured object is stored in a third register of the second trusted module through an extend operation.

In a possible implementation, the first trusted module is a firmware-based trusted platform module fTPM, and the measurement value of the second measured object is stored in a platform configuration register PCR of the first trusted module; and/or the second trusted module is a discrete trusted platform module dTPM or an integrated trusted platform module, and the measurement value of the first measured object is stored in a PCR of the second trusted module.

In a possible implementation, the first measured object includes the measurement value of the second measured object; and before the obtaining a measurement value of a first measured object in a computing device, the method further includes: obtaining the measurement value of the second measured object, where the second measured object includes at least one of the following: an APP, a process, a program, a log, a database, a file, or data in the computing device; and sending the measurement value of the second measured object to the first trusted module.

In a possible implementation, before the obtaining a measurement value of a first measured object in a computing device, the method includes: detecting that the first measured object changes.

In a possible implementation, before the obtaining a measurement value of a first measured object in a computing device, the method includes: receiving a periodically triggered status monitoring indication.

In a possible implementation, the obtaining a measurement value of a first measured object in a computing device includes: obtaining one measurement value corresponding to at least two first measured objects.

According to a second aspect, this application provides a trusted measurement apparatus. The apparatus includes: an obtaining module, configured to obtain a measurement value of a first measured object in a computing device, where the measurement value of the first measured object is for determining whether a firmware-based first trusted module in the computing device is trusted, and the first trusted module is configured to store a measurement value of a second measured object that is in the computing device; and a sending module, configured to send the measurement value of the first measured object to a hardware-based second trusted module.

In a possible implementation, the first measured object includes at least one of the following: the first trusted module or data in the first trusted module.

In a possible implementation, the measurement value of the second measured object is stored in a first register of the first trusted module through an extend operation, where data that is in the first register after the extend operation is generated based on data that is in the first register before the extend operation and the measurement value of the second measured object; and the measurement value of the first measured object is stored in a second register of the second trusted module through the extend operation, where data that is in the second register after the extend operation is generated based on data that is in the second register before the extend operation and the measurement value of the first measured object.

In a possible implementation, the first trusted module is a firmware-based trusted platform module fTPM, and the measurement value of the second measured object is stored in a platform configuration register PCR of the first trusted module; and/or the second trusted module is a discrete trusted platform module dTPM or an integrated trusted platform module iTPM, and the measurement value of the first measured object is stored in a PCR of the second trusted module.

In a possible implementation, the obtaining module is further configured to: before obtaining the measurement value of the first measured object in the computing device, obtain the measurement value of the second measured object, where the first measured object includes the measurement value of the second measured object, and the second measured object includes at least one of the following: an APP, a process, a program, a log, a database, a file, or data in the computing device; and the sending module is further configured to send the measurement value of the second measured object to the first trusted module.

In a possible implementation, the obtaining module is further configured to: after detecting that the first measured object changes, perform a step of obtaining the measurement value of the first measured object in the computing device.

In a possible implementation, the obtaining module is further configured to: after receiving a periodically triggered status monitoring indication, perform a step of obtaining the measurement value of the first measured object in the computing device.

In a possible implementation, the obtaining module is specifically configured to obtain one measurement value corresponding to at least two first measured objects.

According to a third aspect, this application provides a computing device. The computing device includes a firmware-based first trusted module of the computing device, a hardware-based second trusted module, and the trusted measurement apparatus according to any one of the second aspect, where the first trusted module is configured to store a measurement value of a second measured object that is in the computing device; and the second trusted module is configured to store a measurement value of a first measured object.

In a possible implementation, the computing device further includes: a verification apparatus, configured to: obtain the measurement value of the first measured object from the second trusted module; and determine, based on the measurement value of the first measured object, whether the first measured object is trusted.

In a possible implementation, the computing device further includes: a measurement execution apparatus, configured to: obtain an integrity parameter of the first measured object; send the integrity parameter of the first measured object to the measurement execution apparatus; and receive the measurement value of the first measured object sent by the measurement execution apparatus, where the measurement execution apparatus is configured to: receive the integrity parameter of the first measured object; and generate the measurement value of the first measured object based on the integrity parameter of the first measured object.

According to a fourth aspect, this application provides a trusted measurement program, where when being executed, the trusted measurement program is for implementing the trusted measurement method according to any one of the first aspect.

According to a fifth aspect, this application provides a trusted measurement system. The system includes: a firmware-based first trusted module of a computing device, a hardware-based second trusted module, and the trusted measurement apparatus according to any one of the second aspect, where the first trusted module is configured to store a measurement value of a second measured object that is in the computing device; and the second trusted module is configured to store a measurement value of a first measured object.

In a possible implementation, the trusted measurement system further includes: a verification apparatus, configured to: obtain the measurement value of the first measured object from the second trusted module; and determine, based on the measurement value of the first measured object, whether the first measured object is trusted.

In a possible implementation, the trusted measurement system further includes: a measurement execution apparatus, configured to: obtain an integrity parameter of the first measured object; send the integrity parameter of the first measured object to the measurement execution apparatus; and receive the measurement value of the first measured object sent by the measurement execution apparatus, where the measurement execution apparatus is configured to: receive the integrity parameter of the first measured object; and generate the measurement value of the first measured object based on the integrity parameter of the first measured object.

According to a sixth aspect, this application provides a computer-readable storage medium. The computer-readable storage medium stores instructions, and the instructions may be run by one or more processors on a processing circuit. When the instructions are run on a computer, the computer is enabled to perform the method according to any one of the possible implementations of the first aspect.

## BRIEF DESCRIPTION OF DRAWINGS

FIG. 1 is a schematic flowchart 1 of a trusted measurement method according to an embodiment of this application;
FIG. 2 is a schematic diagram of a system architecture of a computing device to which a trusted measurement method is applied according to an embodiment of this application;
FIG. 3 is a schematic processing flowchart 1 of a trusted measurement method according to this application;
FIG. 4 is a schematic processing flowchart 2 of a trusted measurement method according to this application;
FIG. 5 is a schematic processing flowchart 3 of a trusted measurement method according to an embodiment of this application;
FIG. 6 is a schematic diagram 1 of a structure of a trusted measurement apparatus according to an embodiment of this application;
FIG. 7 is a schematic diagram 2 of a structure of a trusted measurement apparatus according to an embodiment of this application; and
FIG. 8 is a schematic diagram of a structure of a computing device according to an embodiment of this application.

## DESCRIPTION OF EMBODIMENTS

Terms used in implementations of this application are only used to explain specific embodiments of this application, but are not intended to limit this application.

This application provides a trusted measurement method for determining security of a computing device. A measurement result of each type of object on the computing device is obtained according to the method provided in this application, and then whether the type of object on the computing device is tampered with may be determined by comparing the measurement result with an expected measurement result, so that a user of the computing device may make a right judgment and perform correct processing when it is found that a system environment of the computing device is tampered with.

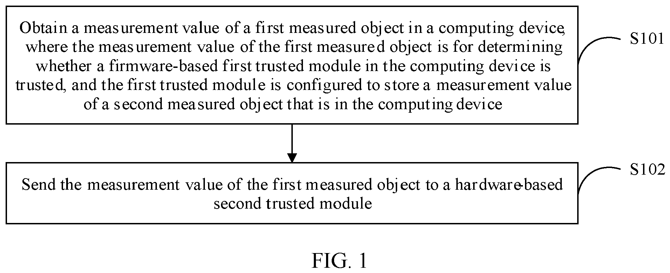

FIG. 1 is a schematic flowchart 1 of a trusted measurement method according to an embodiment of this application. This embodiment of this application may be performed by a trusted measurement apparatus. In an example, the trusted measurement apparatus may be an application (Application, APP) program that can run on a computing device. As shown in FIG. 1, this embodiment of this application may include the following steps:

S101: Obtain a measurement value of a first measured object in the computing device, where the measurement value of the first measured object is for determining whether a firmware-based first trusted module in the computing device is trusted, and the first trusted module is configured to store a measurement value of a second measured object that is in the computing device.

S102: Send the measurement value of the first measured object to a hardware-based second trusted module.

In this embodiment of this application, the first trusted module and the second trusted module are deployed in the computing device, and both the first trusted module and the second trusted module are configured to store a measurement value of a measured object in the computing device. The measured object in the computing device is referred to as a measured object. For example, the measured object is an APP, a process, a program, a file, a log, a database, data, or the like. The measurement value of the measured object may be determined based on an integrity parameter of the measured object, and the integrity parameter of the measured object may be a hash value, a signature, or the like of the measured object.

There are a plurality of methods for writing data into the first trusted module and the second trusted module. In an example, data is allowed to be directly written into the first trusted module and the second trusted module or data is allowed to be written into the first trusted module and the second trusted module through an extend operation. During actual application, that the data that is written through the extend operation is tampered with may be detected, to quickly determine whether a measured object is trusted. In another example, the first trusted module and the second trusted module support ensuring data security through encrypted storing, encrypted reading/writing, allowing only an object having a key to write data and read data, or the like.

The first trusted module and the second trusted module may be configured to store measurement values of various types of measured objects. In an example, the second trusted module receives a to-be-stored measurement value sent by the trusted measurement apparatus. Then, a verification apparatus may be allowed to read a measurement value of each measured object in the first trusted module and the second trusted module, and compare the read measurement value with an expected measurement value, to determine whether the measured object is trusted, so that whether the computing device is trusted may be determined depending on whether the measured object on the computing device is trusted.

In this embodiment of this application, the first trusted module is configured to store the measurement value of the second measured object, and the second trusted module is configured to store the measurement value of the first measured object. Table 1 schematically shows a correspondence between a measurement value of a measured object and a storage location.

**Table 1**

| Measured object | Measurement value corresponding to the measured object | Storage location |
| --- | --- | --- |
| Second measured object | Measurement value of the second measured object | First trusted module |
| First measured object | Measurement value of the first measured object | Second trusted module |

For example, the second measured object may be any type of measured object on the computing device. During actual application, the second measured object may be a measured object that is on the computing device after the first trusted module is started. For example, the second measured object may be APP code, an APP startup log, an APP operation log, a database, a database operation log, or the like. The first measured object may be a measured object for determining whether the first trusted module is trusted. For example, the first measured object may include at least one of the following: the first trusted module or data in the first trusted module.

In this embodiment of this application, a storage capacity of the firmware-based first trusted module may be configured based on a hardware capability of the computing device, so that the first trusted module supports storing of measurement values of a large quantity of measured objects.

In this embodiment of this application, the first trusted module is implemented based on firmware, and code and the data in the first trusted module may be actually stored in a memory. It should be noted that, even if the data stored in the first trusted module is stored in a secure memory in a trusted execution environment, the data stored in the first trusted module may be tampered with, in other words, the measurement value stored in the first trusted module may be tampered with. To improve security of the first trusted module and the data in the first trusted module, in this embodiment of this application, the measurement value of the first measured object is sent to the hardware-based second trusted module, and the second trusted module stores the received measurement value of the first measured object.

A processing module that is in the hardware-based second trusted module and that is configured to protect information such as internal data and code may be implemented based on hardware, so that security of the internal data may be ensured. That data stored in the second trusted module is tampered with may be detected by the verification apparatus. In comparison with the second trusted module, in the firmware-based first trusted module, a processing module configured to protect information such as internal data and code may be implemented based on firmware, and therefore may be modified. When the firmware-based processing module is modified, that the first trusted module or the data in the first trusted module is tampered with may not be detected. It can be learned that security of the hardware-based second trusted module is higher than that of the firmware-based first trusted module. Based on this, it is more secure and accurate to determine, by using the measurement value of the first measured object stored in the second trusted module, whether the first trusted module and the data in the first trusted module are trusted.

In this embodiment of this application, for example, the first measured object may include the first trusted module as a whole and various types of data stored in the first trusted module. For example, the first trusted module may be an APP, a program, or a process that corresponds to the first trusted module implemented as a whole. The data in the first trusted module may be a process, a program, code, or data that needs to be started or loaded when the first trusted module is started or runs, data stored in a register of the first trusted module, or the like. To improve the security of the first trusted module and the data in the first trusted module, the measurement value of the first trusted module and a measurement value of the data in the first trusted module may be separately extended to a register of the second trusted module. Then, the verification apparatus may separately perform verification based on data stored in the register of the second trusted module, and determine, with reference to a verification result, whether the first trusted module is trusted.

In this embodiment of this application, a measurement value of each type of measured object may be stored in the register of the first trusted module or the register of the second trusted module through the extend operation. Data that is in a register after the extend operation is generated based on data that is in the register before the extend operation and a to-be-stored measurement value of a measured object. In an example, the measurement value of the second measured object is stored in a first register of the first trusted module through the extend operation, where data that is in the first register after the extend operation is generated based on data that is in the first register before the extend operation and the measurement value of the second measured object. In another example, the measurement value of the first measured object may be extended to a second register of the second trusted module, where data that is in the second register after the extend operation is generated based on data that is in the second register before the extend operation and the measurement value of the first measured object. Because a result of the extend operation is irreversible, that the data stored in the first trusted module or the second trusted module through the extend operation is tampered with may be quickly detected by the verification apparatus. In this way, security of the computing device may be further improved.

In this embodiment of this application, the first measured object may include at least one of the following: the first trusted module or the data in the first trusted module. The measurement value of the first trusted module may be for determining whether code that is of the first trusted module and that is currently executed on the computing device is trusted. In an implementation, the data in the first trusted module includes the measurement value of the second measured object or the like. The measurement value of the second measured object is a basis for determining whether the second measured object is trusted, and the measurement value of the data in the first trusted module may be for determining whether the measurement value of the second measured object is trusted, that is, whether the basis is trusted.

In this embodiment of this application, the second trusted module may be further configured to store a measurement value of a third measured object.

In an implementation, the third measured object is a measured object that is in the computing device before the first trusted module is started, and the second measured object is a measured object that is in the computing device after the first trusted module is started. From a perspective of the computing device as a whole, the measurement value of the third measured object may be for determining whether an operating environment in the computing device is trusted before the first trusted module is started. The operating environment may include code that is being executed in an operating system, a global variable, data stored in a memory of the computing device, or the like. For example, a measured object in a boot stage is statically measured, to be specific, code is measured before the code is loaded and executed; and a measured object in an operation stage is dynamically measured, to be specific, code that is being executed is measured when an execution state of the code changes, or code that is being executed is periodically measured.

In an example, the third measured object includes a measured object for starting the first trusted module. For example, during actual application, if the first trusted module runs based on an operating system on the computing device, the measured object that is in the computing device and that is for starting the first trusted module includes at least one of the following: BIOS code, a boot loader of the computing device, or boot code of the operating system. For example, the boot code of the operating system is code for enabling a basic function of the operating system, for example, kernel (kernel) code of a Linux operating system. It should be noted that there may be another implementation for code loaded and executed before another type of operating system is booted and a loading and execution sequence. This is not limited in this embodiment of this application. In this embodiment of this application, the measurement value of the third measured object may also be stored in the register of the second trusted module through the extend operation.

In this embodiment of this application, there are a plurality of implementations for obtaining the measurement value of the first measured object in the computing device in step S101.

In an implementation, the foregoing steps may include: The trusted measurement apparatus receives the measurement value of the first measured object that is determined by a measurement execution apparatus based on an integrity parameter of the first measured object. For example, the measurement execution apparatus is a local measurement module or a measurement server. In an example, the local measurement module is an APP or a process in the computing device.

In another implementation, the foregoing steps may include: The trusted measurement apparatus obtains an integrity parameter of the first measured object, and determines the measurement value of the first measured object based on the integrity parameter of the first measured object. In an example, when the first measured object includes the first trusted module, a measurement execution apparatus obtains an integrity parameter of the first trusted module. For example, a digital signature of the first trusted module is obtained as a measurement value of the first trusted module. In another example, when the first measured object includes the data in the first trusted module, a measurement execution apparatus obtains a hash value of the data in the first trusted module, and uses the hash value as a measurement value corresponding to the data. This is not limited in this application.

In this embodiment of this application, there are one or more first measured objects. When there are a plurality of first measured objects, another group of implementations may be used for step S101 and step S102. In an optional implementation, the foregoing steps include: The trusted measurement apparatus separately obtains a measurement value of each first measured object and separately sends the measurement value of each first measured object to the second trusted module, and then the second trusted module separately stores the measurement value of each first measured object. In another optional implementation, the foregoing steps include: The trusted measurement apparatus obtains, for any at least two of the plurality of first measured objects, one measurement value corresponding to the at least two first measured objects and sends the measurement value to the second trusted module, and then the second trusted module stores the measurement value in one register. In this manner, storage space of the second trusted module is used to store the measurement value for determining whether the plurality of first measured objects are trusted, so that the storage space of the second trusted module may be saved.

For example, a quantity of first measured objects is N, where N is an integer greater than or equal to 2. In an example, the trusted measurement apparatus obtains one measurement value corresponding to the N first measured objects. For example, N integrity parameters corresponding to the N first measured objects are obtained, then an integrity parameter of the N integrity parameters is obtained, and then one measurement value corresponding to the N first measured objects is determined based on the integrity parameter of the N integrity parameters. In another example, the N first measured objects include: code of APP 1, an operation log of APP 1, code of APP 2, an operation log of APP 2, file 1 on which reading and writing are allowed to be performed by APP 1 and APP 2, and the like. The trusted measurement apparatus separately obtains one measurement value that corresponds to the first measured object and that is related to APP 1 and one measurement value that corresponds to the first measured object and that is related to APP 2. To be specific, measurement value A corresponding to the code of APP 1, the operation log of APP 1, and file 1 are obtained, measurement value B corresponding to the code of APP 2, the operation log of APP 2, and file 1 are obtained, and measurement values A and B are separately sent to the second trusted module. In this manner, whether a key APP in the computing device is trusted may be quickly determined on a basis of saving the storage space of the second trusted module.

In this embodiment of this application, the foregoing steps S101 and S102 may be performed under a plurality of trigger conditions.

In an example, the trusted measurement apparatus performs steps S101 and S102 when detecting that the first measured object changes. For example, the first measured object includes at least one measured object including an APP, a process, a program, a log, a database, or a file of the first trusted module, data in the first trusted module, or the like. For example, the data in the first trusted module may include a measurement value that is of the second measured object and that is stored in a register of the first trusted module and the like. When it is detected that the data in the first trusted module changes, or when a startup request of the APP of the first trusted module is detected, or when a creation request of any process of the first trusted module is detected, or when a loading request or a dynamic check request of any program of the first trusted module is detected, or when it is detected that the log of the first trusted module changes, or when it is detected that the database of the first trusted module changes, steps S101 and S 102 are performed. In this manner, measurement of the first trusted module during a boot stage may be implemented and measurement may be implemented when the measurement value of the second measured object changes.

In another example, when receiving a periodically triggered status monitoring indication, the trusted measurement apparatus performs steps S101 and S102. For example, the trusted measurement apparatus receives the status monitoring indication that is periodically generated based on a preset detection periodicity, and performs steps S101 and S102 after receiving the status monitoring indication. In this manner, dynamic measurement of the computing device may be implemented, in other words, a measured object that is in a running process is periodically measured.

In this embodiment of this application, the measurement value of the second measured object in the first trusted module is obtained in a plurality of manners. For example, the measurement value of the second measured object is obtained when it is detected that the second measured object changes, or is obtained when a periodically triggered status monitoring indication is received. For example, the second measured object is any measured object on the computing device. In an example, the second measured object is another measured object other than the first trusted module and the data in the first trusted module.

In an optional implementation, before step S101, the measurement value of the second measured object is sent by the trusted measurement apparatus to the first trusted module. For example, when detecting that the second measured object changes, the trusted measurement apparatus obtains the measurement value of the second measured object, and sends the measurement value to the first trusted module.

In another optional implementation, the computing device supports configuration of at least two trusted measurement apparatuses, for example, a first trusted measurement apparatus and a second trusted measurement apparatus. The measurement value of the second measured object is obtained and sent to the first trusted module by the first trusted measurement apparatus, and the measurement value of the first measured object is obtained and sent to the second trusted module by the second trusted measurement apparatus. The first measured object may include the data in the first trusted module, for example, the measurement value of the second measured object.

Based on any one of the foregoing implementations, in this embodiment of this application, the first trusted module may be a firmware-based trusted platform module (Trust Platform Module, TPM) or a firmware-based trusted cryptography module (Trust Cryptography Module, TCM). In an example, the first trusted module is the firmware-based trusted platform module (firmware TPM, fTPM). Accordingly, the measurement value of the second measured object may be stored in a platform configuration register PCR of the first trusted module. For example, a hardware-based TPM or a hardware-based TCM may be disposed in a bus for communication between the computing device and an external IO device, to learn of code that is actually loaded into a memory and to be executed by a CPU and to-be-used data that is actually loaded into the memory, so that authenticity of a measured object may be ensured.

In this embodiment of this application, the second trusted module may be the hardware-based TPM or the hardware-based TCM. In an example, the second trusted module is a discrete trusted platform module (Discrete TPM, dTPM) or an integrated trusted platform module (Integrated TPM). Accordingly, the measurement value of the first measured object may be stored in a PCR of the second trusted module. For example, the firmware-based TPM or the firmware-based TCM runs on a computing device that supports TrustZone.

In this embodiment of this application, a combination of the fTPM and the dTPM may improve security on a basis of increasing a quantity of PCRs. Because the fTPM supports extended defining of a configuration register, a large quantity of PCRs may be provided. For example, the fTPM supports configuration of more than 24 PCRs. In addition, the dTPM stores a measurement value of an fTPM program, to periodically verify an fTPM module, so that a running fTPM firmware program is valid.

For example, a digest value is obtained by performing, by using a Hash algorithm, calculation on values of all PCRs of the fTPM, and then extended to a specific PCR of the dTPM. When it is detected that the value of the PCR of the fTPM changes, a digest value corresponding to the values of all the PCRs is obtained through recalculation and synchronously extended to the specific PCR of the dTPM. Then, the dTPM or a verification apparatus periodically verifies the digest value that is of the PCRs of the fTPM and that are stored in the specific PCR, and reports an alarm when a verification result is inconsistent with an expected result. In this manner, data and security in the fTPM may be ensured.

The following uses an example in which the first trusted module is the fTPM and the second trusted module is the dTPM to describe the trusted measurement method provided in this application. A common operating system and a trusted operating system may be deployed in the computing device. For example, the common operating system may be a Linux or Windows operating system. The fTPM is a trusted application (Trusted Application, TA) running based on the trusted operating system.

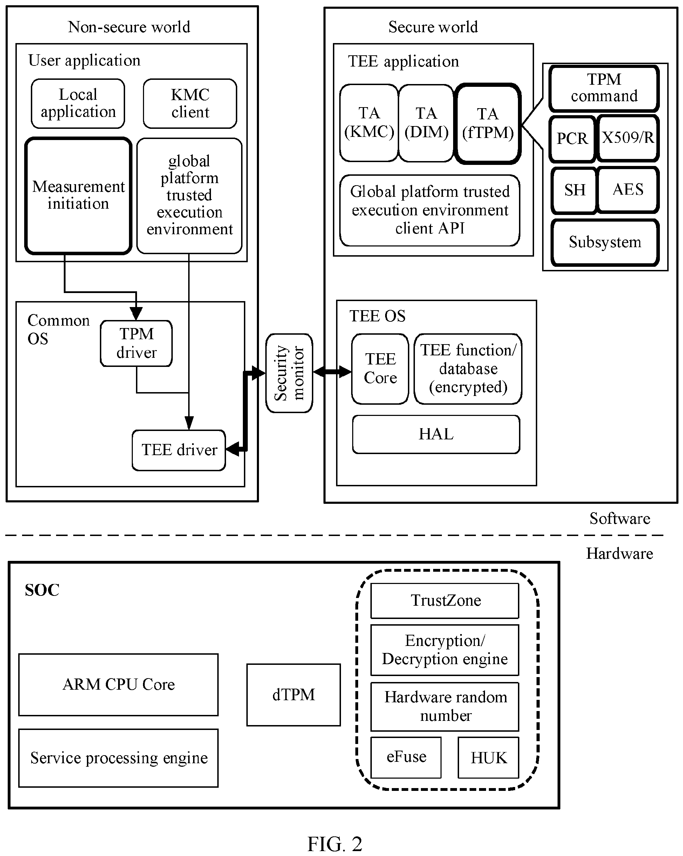

FIG. 2 is a schematic diagram of a system architecture of a computing device to which a trusted measurement method is applied according to an embodiment of this application. As shown in FIG. 2, the computing device includes two parts: hardware (Hardware) and software (Software).

The hardware part of the computing device may include a system on chip (System on Chip, SOC). The SOC includes a dTPM, an ARM CPU Core, a service processing engine, TrustZone (TrustZone), an encryption/decryption engine, a hardware random number, an eFuse (eFuse), a hardware unique key (Hardware Unique Key, HUK), and the like. TrustZone, the encryption/decryption engine, the hardware random number, the eFuse, and the HUK may be for implementing secure isolation of code and data. It should be noted that a TrustZone technology is implemented through hardware isolation. For example, an operating system in a secure world and an operating system in a non-secure world respectively operate on mutually isolated hardware.

The software part of the computing device may include the non-secure world (Non-Secure world) and the secure world (Secure-world). The secure world and the non-secure world implement communication via a secure monitor (Secure Monitor). The operating system in the secure world is referred to as a trusted execution environment (Trust Execute Environment, TEE) operating system (TEE OS), which is referred to as a trusted operating system for short below. The operating system in the non-secure world is referred to as a common operating system. In the non-secure world, a common user application (User App) runs based on the common operating system. In the secure world, a trusted execution environment application (TEE App) runs based on the TEE OS.

For example, the TEE Apps in the secure world include a TA (fTPM), a TA (KMC), a TA (DIM), and a global platform trusted execution environment internal API (Global Platform TEE internal API). The TA (fTPM) is an implementation of the first trusted module in the foregoing embodiments. The TA (fTPM) may include a platform configuration register (Platform Configuration Register, PCR), a TPM command (TPM COMMAND), X509/RS, a secure hash algorithm (Secure Hash Algorithm, SHA), an advanced encryption standard (Advanced Encryption Standard, AES), a subsystem Sub System, and the like. The TA (DIM) is a TA for dynamic integrity measurement (Dynamic Integrity Measurement, DIM).

The User Apps in the non-secure world include a native application (Native App), a key management system (Key Manager Center, KMC), a measurement initiation module, and a global platform trusted execution environment client API (Global Platform TEE Client API), and the like. The Global Platform TEE internal API and the Global Platform TEE Client API are for establishing a communication connection between the User APP and each TA. The measurement initiation module may be configured to obtain a measurement value of a measured object. It should be noted that the measurement initiation module may be the user application running based on the common operating system, or may be a system application or a system process in the common operating system, or may be the TA in the secure world.

The TEE OS in the secure world supports running of a TEE Core, a TEE function (Func)/database (Libs), an encryption function (Crypt), a hardware abstraction layer (Hardware Abstraction Layer, HAL), and the like.

The common operating system supports running of a TPM driver (TPM Drv) and a TEE driver (TEE Drv). The TEE driver (TEE Drv) is configured to implement a communication connection between the common operating system and the TEE OS, and the TPM Drv is configured to implement a communication connection between a measurement initiation APP and the TA (fTPM) in the secure world.

In this embodiment of this application, a measurement value of a first measured object may be stored in a PCR of the dTPM, and a measurement value of a second measured object may be stored in a PCR of the fTPM.

It should be noted that, to prevent the measurement value stored in the PCR from being tampered with or forged by malicious code, the foregoing various TPMs predefines that an operation performed on the PCR needs to be limited. This includes the following. In an aspect, it is not allowed to randomly perform reading or writing on the PCR through port mapping, which is a manner used when reading or writing is performed on a register of a common character device. In another aspect, the PCR is disposed inside the various TPMs, to protect internally stored data. In still another aspect, only two operations are allowed to be performed to modify a value of the PCR: a reset (Reset) operation and an extend (Extend) operation. The reset operation may be performed after a machine is powered off or rebooted, and the value of the PCR is automatically reset to zero.

When a system is operating, content of the PCR may be changed only through the extend operation. For example, the extend operation is defined as follows:

$$PCR[n] = HASH\{PCR[n{-}1] \parallel newMeasurement\}.$$

PCR[n-1] represents data stored in the PCR at an $(n{-}1)^{th}$ moment, PCR[n] represents data stored in the PCR at an $n^{th}$ moment, and newMeasurement represents a measurement value that is of a measured object and that is obtained at the $n^{th}$ moment. The extend operation may be irreversible. For example, a PCR value obtained by first extending measurement value A to the PCR and then extending measurement value B to the PCR is different from a PCR value obtained by first extending measurement value B to the PCR and then extending measurement value B to the PCR. The PCR may record a measurement value sequence of an infinite length through the extend operation, where the sequence including a series of measurement values may reflect transition of a system status. If a measurement value in the sequence obtained through the extend operation changes, a subsequent measurement sequence is affected. Consequently, a value in the PCR is inconsistent with an expected value recorded by a verification apparatus.

In this embodiment of this application, after the measurement value of the first measured object is sent to the second trusted module in step S 102, the measurement value is written into the PCR through the extend operation, in other words, the measurement value of the first measured object is extended to the PCR of the second trusted module. Similarly, the measurement value of the second measured object may be written into the PCR of the first trusted module through the extend operation.

It should be noted that a trust transfer mechanism may be used for integrity measurement of the computing device. It is defined in the trust transfer mechanism that, provided that a current stage is determined to be trusted, security of a next stage is measured by the current stage. After the next stage is determined to be trusted, a control right is transferred to the next stage, and then the transferring occurs in this manner stage by stage in sequence. Based on the trust transfer mechanism, when an operating environment on the computing device at a moment is trusted, if a measured object that needs to be run at a next moment is trusted, it is considered that an operating environment after the measured object that needs to be run at the next moment is trusted.

A trust chain may be transferred by storing the measurement value through the extend operation. For example, a loading sequence or an invoking sequence of some measured objects in the computing device is fixed, for example, a plurality of programs loaded or executed in a boot stage of the computing device. The measured objects whose loading sequence or invoking sequence is fixed may form a sequence of measured objects, which is referred to as a measured object sequence in a fixed sequence. For any measured object sequence in a fixed sequence, a measurement value corresponding to the measured object in the sequence is written into a PCR through the extend operation. For the PCR, when data in the PCR is verified to be trusted, a plurality of measured objects that are first invoked and that correspond to the PCR are all trusted, and the plurality of measured objects may form a trust chain. Each trusted measured object may further be used as a starting point of a new trust chain. When a new measured object is executed based on a trusted measured object, provided that it is determined that code and data of the new measured object are trusted, a system operating environment in which the code and data of the new measured object are loaded and executed is also trusted. For a computing device on which two operating systems are deployed, when loading and executing code, the computing device is allowed to load and execute code on each operating system one by one through time slice switching, to implement sequential loading or execution of a measured object, so that trust chain transfer is implemented.

For example, for the computing device shown in FIG. 2, code loaded and executed in the boot stage of the computing device includes BIOS code, an operating system boot loader, and operating system boot code. In an example, a measurement process of the computing device in the boot stage includes: obtaining measurement value 1 of the BIOS code, and extending measurement value 1 to PCR 1 of the second trusted module; obtaining measurement value 2 of operating system boot loader code, and extending measurement value 2 to PCR 1; and obtaining measurement value 3 of the operating system boot code, and extending measurement value 3 to PCR 1. A verification apparatus for verifying whether a measured object is trusted reads data in PCR 1 after each extend operation, and compares the data with an expected value, to determine whether the code is trusted.

It should be noted that the first trusted module is usually started after the operating system boot code is executed, and the first trusted module cannot store a measurement value of code loaded and executed before the first trusted module is started. Therefore, a measurement value of a measured object in the boot stage is stored in the second trusted module through the extend operation, so that whether an operating environment is trusted before the first trusted module is started may be measured.

During actual application, measurement of a current measured object needs to be performed by another object that is loaded or invoked before the current measured object. That is, a measurement process needs to be earlier than a scheduling execution process, to ensure authenticity of the measured object in the measurement process. A process of verifying a measurement result may be later than the scheduling execution process, or may be performed while the scheduling execution process is performed. In one example, a principle of measurement before execution is followed. When a measured object to be loaded for execution is verified to be untrusted, loading of the untrusted measured object is stopped, thereby helping a user quickly determine security of the computing device. In another example, when the verification process is later than the scheduling execution process, a measured object verified to be untrusted is recorded in a log for a user to look up.

In this embodiment of this application, a large quantity of PCRs are defined by using the fTPM, so that measurement of measured objects in a plurality of dimensions in the computing device may be supported, for example, measurement of a plurality of measurement links that are planned based on a type and an invoking sequence of a measured object is supported. The following uses a specific example to describe the trusted measurement method provided in this embodiment of this application.

In an application scenario of this embodiment of this application, for a complex system, for example, an operating system, there may be a plurality of processes. These processes may separately run based on different application scenarios. Functions of the processes are independent, and the processes need to be independently started and dynamically loaded. For example, the processes are loaded and executed in an unexpected execution sequence, or execution is interrupted. In this scenario, the TPM trust chain transfer cannot be directly used to measure the entire system. In this case, it is considered that a measurement link is planned based on the application scenario of the process. It should be noted that, for a measured object belonging to a measurement link, one PCR may be used to record a measurement value corresponding to the measured object.

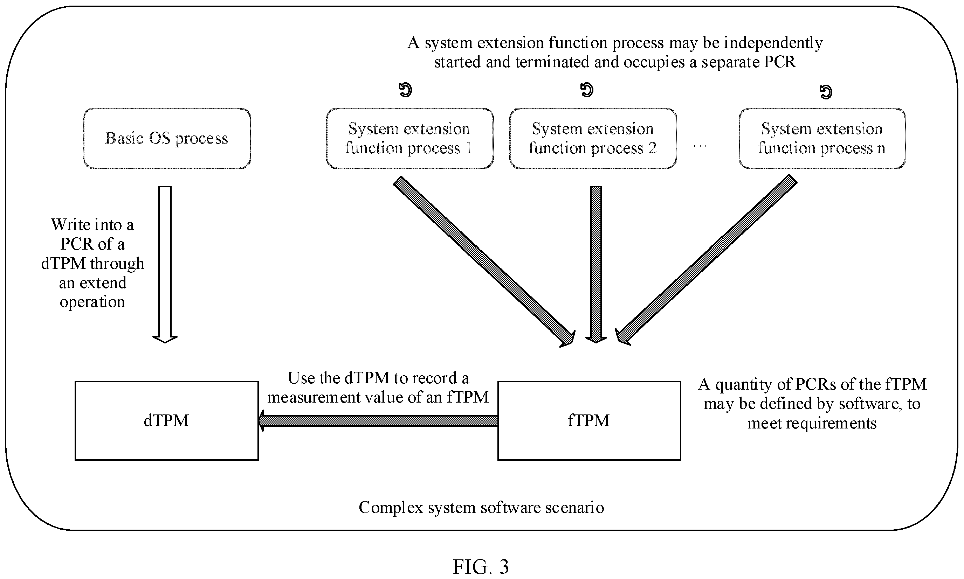

FIG. 3 is a schematic processing flowchart 1 of a trusted measurement method according to this application. As shown in FIG. 3, in this embodiment of this application, a complex system may be divided into two measurement links: a basic system process and a system extension function process. The basic system process is responsible for booting a framework of an operating system.

A measurement value of the basic system process loaded and executed in a boot stage is stored in a PCR of a dTPM. It should be noted that the basic system process may be started in a trust chain transfer manner of the dTPM, to be specific, a trust chain in the boot stage may include one or more basic system processes that need to be loaded and executed in the boot stage. For example, a part of code that is for obtaining the measurement value of the basic system process and extending the measurement value to the dTPM may further be added to the trust chain in the boot stage. In a framework boot stage of the operating system, the part of code that is loaded and executed may implement only a part of functions of the trusted measurement apparatus in the foregoing embodiments, to ensure framework operating security of the system.

A measurement value of the system extension function process is stored in a PCR of an fTPM. For example, the system extension function process is a process that meets at least one of the following conditions: a process corresponding to an independent function, a process that can be independently started and terminated, or a process that does not extend and affect an operating system framework or another system extension function process even if an exception occurs. During actual application, a PCR is used for each system extension function process, to record a corresponding measurement value. In some scenarios, the system extension function process may be started together with the basic system process, or may be started when required. This is not limited in this application.

Based on the foregoing two measurement links obtained through division, an overall security measurement solution of a computing device may include the following steps.

According to a first aspect, in the framework boot stage of the operating system, the measurement value of the basic system process is obtained, and the measurement value is extended to the dTPM. According to a second aspect, the measurement value of the system extension function process is obtained and extended to the fTPM. According to a third aspect, based on the second aspect, when it is detected that the measurement value of the system extension function process stored in the fTPM changes, measurement values of stored data in all PCRs in the fTPM are obtained, and the measurement values of the stored data in all the PCRs in the fTPM are extended to the dTPM. For example, the steps of the second aspect and the third aspect may be performed by a first trusted measurement apparatus, and the step of the third aspect may be performed by the first trusted measurement apparatus. The basic system process may be measured based on the step of the first aspect, and the extended system process process may be measured based on the second aspect and the third aspect. Therefore, whether the computing device is trusted may be comprehensively determined from two aspects: the basic system process and the extended system process.

For example, a measurement procedure in a boot stage and an operating stage of the computing device may include: When the computing device is powered on, a core root of trust for measurement CRTM is first loaded and run. It should be noted that, during actual application, the CRTM may determine code that is first executed when the computing device is booted. The CRTM may be a segment of code. The CRTM needs to be trusted and may be stored in a BIOS. The CRTM may not have a permission to perform writing on the dTPM. Then, the CRTM obtains a measurement value of the BIOS, and loads the BIOS when it is determined that the BIOS is trusted. Then, because the CRTM does not have the permission to perform writing, the BIOS extends the measurement value of the BIOS to PCR 1 of the dTPM. Then, the BIOS obtains a measurement value of an OS basic process, and extends the measurement value of the OS basic process to PCR 1 of the dTPM. When it is determined that the OS basic process is trusted, the OS basic process is loaded. For example, whether the BIOS and the OS basic process are trusted is determined by using a secure boot process. During actual application, only a measurement step may be performed, and whether measurement data is trusted is not determined. The measurement data is for determining security of the boot stage after booting. In the operating stage of the computing device, the OS basic process obtains a measurement value of APP 1, extends the measurement value of APP 1 to PCR 2 of the fTPM, and then loads APP 1. Simultaneously, the OS basic process obtains a measurement value of APP 2, extends the measurement value of APP 2 to PCR 3 of the fTPM, and then loads APP 2. APP 1 and APP 2 are APPs used in different application scenarios, and running of APP 1 and APP 2 does not affect each other. For example, operating environments on which APP 1 and APP 2 depend during running are not associated with each other.

Table 2 schematically shows a correspondence between a measurement value of a measured object and a storage location.

**Table 2**

| Measured object | Division of measured objects | Loading stage | Application scenario | Storage Location of a measurement value | |
|---|---|---|---|---|---|
| BIOS | Third measured object | Operating system boot stage | Booting scenario | dTPM | PCR 1 |
| OS basic process | Third measured object | Operating system boot stage | Booting scenario | dTPM | PCR 1 |
| APP 1 | Second measured object | Operating system operating stage | Drawing scenario | fTPM | PCR 2 |

(continued)

| Measured object | Division of measured objects | Loading stage | Application scenario | Storage Location of a measurement value | |
|---|---|---|---|---|---|
| APP 2 | Second measured object | Operating system operating stage | Timing scenario | fTPM | PCR 3 |

APP 1 and APP 2 correspond to different application scenarios, and the running of APP 1 and APP 2 does not affect each other. Therefore, a PCR is used to record each of the measurement values of APP 1 and APP 2.

In this embodiment of this application, a measurement value of a measured object such as the system extension function process is stored in an independent PCR in a first trusted module, so that for the computing device, there is no limitation that the system extension function process and the basic system process need to be started in a fixed sequence. That is, the system extension function process may be started and terminated independently, which does not affect measurement and security of the basic system process.

In this embodiment of this application, the storage location of the measurement value of the measured object is determined based on a loading stage of the measured object, whether the measured object is the first trusted module, whether the measured object is data in the first trusted module, an application scenario, and a type of the measured object. The storage location includes the first trusted module or a second trusted module, a new PCR or an existing PCR, and the like. When a measurement value of any measured object needs to be stored in a new PCR of the first trusted module, a quantity of PCRs is increased by using a configuration mechanism of the first trusted module. It should be noted that, it is agreed that the first trusted module is only configured to store a measurement value of a measured object that is unrelated to the first trusted module. The foregoing steps may be performed by any trusted measurement apparatus in this embodiment of this application.

In an example, based on the loading stage of the measured object, a measurement value of a measured object whose loading stage is the operating system boot stage is sent to the second trusted module, and a measurement value of a measured object whose loading stage is the operating system operating stage is sent to the second trusted module.

In another example, based on the application scenario of the measured object, a measurement value of each second measured object is extended to a PCR that is in the first trusted module and that corresponds to an application scenario of the second measured object. In an example, a plurality of PCRs in the first trusted module one-to-one correspond to a plurality of application scenarios. In another example, a PCR in the first trusted module may be configured to store a measurement value of a measured object related to an application scenario.

In still another example, when it is detected that a measured object is unrelated to the first trusted module and a type of the measured object is an APP, a process, a program, a log, a database, a file, or data, it is determined that the measured object is the second measured object, and a measurement value of the measured object is stored in the first trusted module.

In another application scenario of this embodiment of this application, when the operating system is damaged in the operating stage, the measured object on the computing device is dynamically measured.

It should be noted that if an object loaded on the computing device is not attacked during initial loading or startup, a measurement value obtained in this period may be used to determine that the object currently loaded and run on the computing device is trusted. However, a running state of each object on the computing device does not remain unchanged. The object on the computing device may be damaged in a running process, to be specific, a measurement value obtained when the object is started may not reflect whether the object is trusted in the running process. If measurement is still performed based on criteria during startup, an incorrect result may be provided.

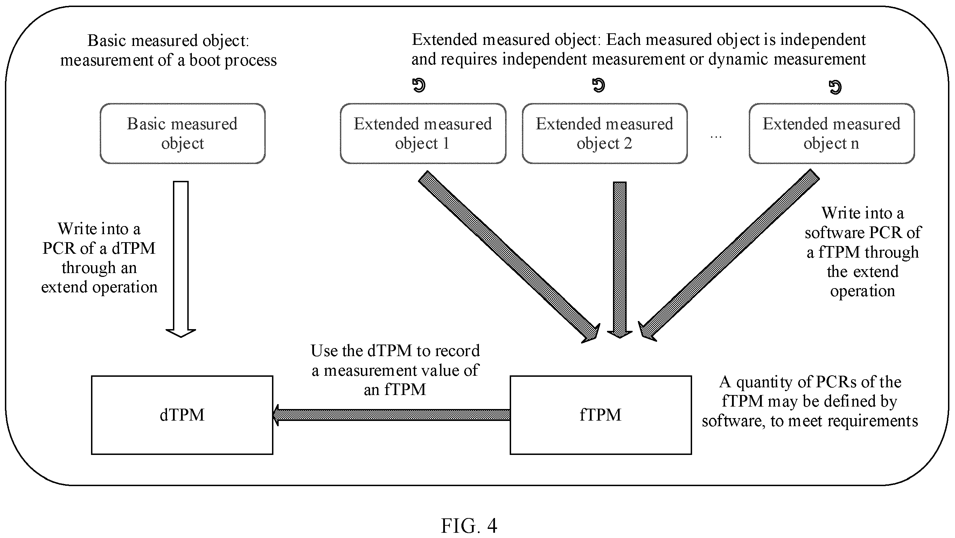

FIG. 4 is a schematic processing flowchart 2 of a trusted measurement method according to this application. As shown in FIG. 4, system measurement includes a system boot measurement process and a system operating measurement process. A measured object in the system boot measurement process is a basic measured object, and a measured object in the system operating measurement process is an extended measured object. During actual application, a measured object whose running state remains unchanged may also belong to the boot measurement process.

A specific measurement solution may be as follows. In an aspect, a measurement value of the basic measured object in a system boot process is stored in a dTPM. For example, the system boot process includes an fTPM startup process. In another aspect, a measurement value of the extended measured object in a system operating process is stored in an fTPM. It should be noted that a measurement value of an extended measured object whose running state may change is stored in an independent PCR. In addition, in the system operating process, if it is detected that the extended measured object changes, for example, a function module changes, a measurement value of the changed extended measured object is re-obtained and updated to a PCR of the fTPM. Then, measurement values corresponding to all PCR values of the fTPM are obtained and updated to the dTPM. For example, a digest of all the PCR values of the fTPM is obtained through calculation and extended to a PCR of the dTPM. Then, correctness of data in the PCR of the dTPM is periodically verified, to determine whether all modules in a running state are trusted.

Through dynamic measurement, real-time measurement may be performed on the measured object whose running state may change, so that whether the measured object on a computing device is trusted may be continuously determined.

In embodiments of this application, by using code and data that are stored in the second trusted module and the first trusted module and a measurement value of a measured object related to the first trusted module, high-level security of the second trusted module may be used to improve security of the first trusted module and the measurement value stored in the first trusted module, so that security of the computing device is improved.

During actual application of embodiments of this application, in addition to the application manners shown in FIG. 3 and FIG. 4, the first trusted module may be further configured to extend a measurement value of a measured object in another application scenario, so that whether the computing device is trusted may be measured from more dimensions.

In embodiments of this application, the first trusted module and the second trusted module may be configured to store measurement values of various types of measured objects related to an operating system, a user APP, and the like that are deployed on the computing device. When a measurement value of a measured object is stored through an extend operation, a value stored in a PCR that stores the measurement value actually corresponds to a trust state of a trust chain. Based on whether a starting point and any node of the trust chain are trusted, data that is stored through the extend operation may be used to determine whether the computing device is always trusted.

For details and technical effects of other technical solutions in this embodiment of this application, refer to descriptions in other embodiments of this application.

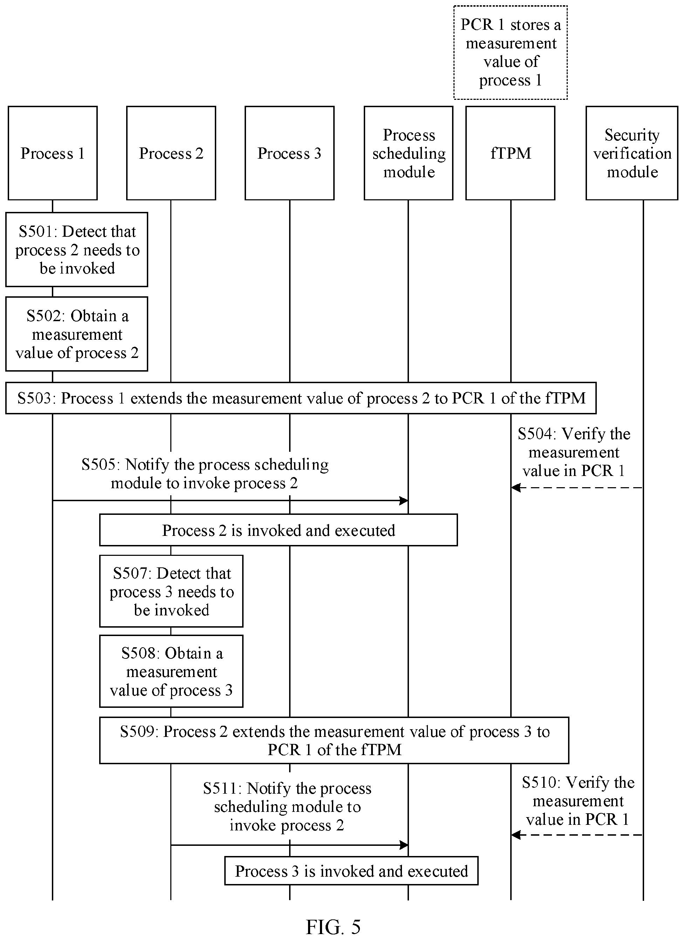

FIG. 5 is a schematic processing flowchart 3 of a trusted measurement method according to an embodiment of this application. This embodiment of this application is performed by a plurality of processes and a process scheduling module. Process 1 is a running process in an operating system, and a measurement value of process 1 is stored in PCR 1 through an extend operation. It may be determined, based on a value in PCR 1, that process 1 is trusted. As shown in FIG. 5, this embodiment of this application may include the following steps.

S501: Process 1 detects that process 2 needs to be invoked.

For example, process 1 needs to invoke process 2.

S502: Process 1 obtains a measurement value of process 2.

In an implementation, process 1 obtains code of process 2, and sends the code of process 2 to a measurement execution apparatus, to obtain the measurement value of process 2. In this implementation, a process in which process 1 obtains the measurement value of process 2 is similar to a process in which the trusted measurement apparatus obtains the measurement value of the measured object in the foregoing embodiments. In another implementation, process 1 sends code of process 2 to a measurement execution apparatus, and the measurement execution apparatus obtains the measurement value of process 2. The measurement execution apparatus may be a local measurement module or a measurement server.

S503: Process 1 extends the measurement value of process 2 to PCR 1 of an fTPM.

Before step S503 is performed, PCR 1 stores the measurement value of process 1. After step S503 is performed, PCR 1 stores a measurement value obtained through combining the measurement value of process 1 and the measurement value of process 2.

S504: A security verification module verifies the measurement value in PCR 1.

Step S504 is an optional step. The step may be used to determine whether process 2 is trusted.

S505: Process 1 notifies the process scheduling module to invoke process 2.

S506: The process scheduling module invokes process 2.

S507: Process 2 detects that process 3 needs to be invoked.

S508: Process 2 obtains a measurement value of process 3.

S509: Process 2 extends the measurement value of process 3 to PCR 1 of the fTPM.

S510: The security verification module verifies the measurement value in PCR 1.

Step S510 is an optional step. The step may be used to determine whether process 3 is trusted.

S511: Process 2 notifies the process scheduling module to invoke process 3.

S512: A trusted measurement apparatus obtains measurement values of all PCRs 1 of the fTPM, and extends the measurement values to PCR 2 of a dTPM.

S513: The security verification module verifies the measurement values in PCR 2.

In this embodiment of this application, process 1, process 2, and process 3 may alternatively be an APP, an application, or the like that supports trusted measurement. To be specific, the trusted measurement method provided in this embodiment of this application may be jointly completed by a plurality of objects that are in a computing device and that support the trusted measurement, to ensure security of the computing device.

For details and technical effects of other technical solutions in this embodiment of this application, refer to descriptions in other embodiments of this application.

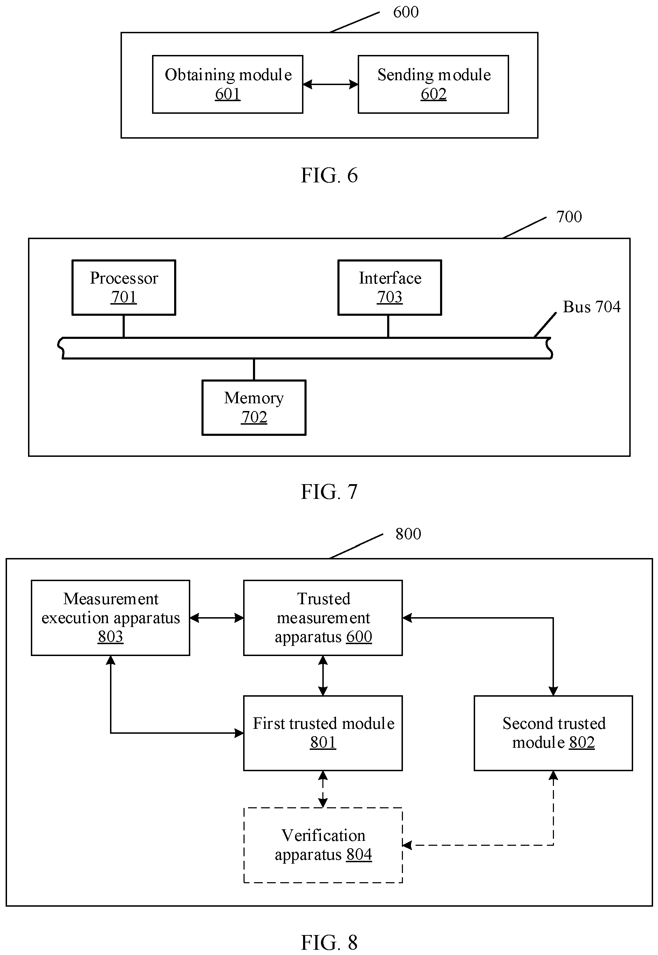

FIG. 6 is a schematic diagram 1 of a structure of a trusted measurement apparatus according to an embodiment of this application. As shown in FIG. 6, this application provides a trusted measurement apparatus 600, including an obtaining module 601 and a sending module 602. The obtaining module 601 is configured to perform step S101 in the foregoing embodiment. The sending module 602 is configured to perform step S102 in the foregoing embodiment.

In this embodiment of this application, the trusted measurement apparatus may be an APP, a program, or the like.

In this embodiment of this application, the trusted measurement apparatus may be a process or an APP in an OS of a computing device, and may be in an REE or a TEE.

It should be noted that the trusted measurement apparatus provided in this embodiment of this application may be configured to perform the trusted measurement method provided in the foregoing embodiments. The method provided in embodiments of this application may be implemented by one or more trusted measurement apparatuses in the computing device through cooperation. For details, refer to the descriptions in the foregoing embodiments. During actual application, steps of the trusted measurement method may be performed by objects such as a plurality of APPs and processes in the computing device. This is not limited in this application.

FIG. 7 is a schematic diagram 2 of a structure of a trusted measurement apparatus according to an embodiment of this application. As shown in FIG. 7, a trusted measurement apparatus 700 in this embodiment of this application includes a processor 701 and a memory 702. The memory 702 is configured to store one or more programs. When the one or more programs are executed by one or more processors, the one or more processors are enabled to implement steps performed by any trusted measurement apparatus in the trusted measurement method in the foregoing embodiments. For example, the trusted measurement apparatus may be a computing device or a component of the computing device. In this embodiment of this application, the trusted measurement apparatus 700 may further include an interface 703, configured to communicate with a first trusted module and a second trusted module. In some scenarios, the interface 703 may be further configured to communicate with a verification apparatus and a measurement execution apparatus. In addition, a server may further include a bus 704, configured to implement internal communication of the trusted measurement apparatus. In this embodiment of this application, the trusted measurement apparatus may alternatively be a chip.

For details and technical effects of other technical solutions in this embodiment of this application, refer to descriptions in other embodiments of this application.

FIG. 8 is a schematic diagram of a structure of a computing device according to an embodiment of this application. As shown in FIG. 8, this application provides a computing device 800. The computing device includes a firmware-based first trusted module 801 of the computing device, a hardware-based second trusted module 802, and a trusted measurement apparatus 803.

The first trusted module is configured to store a measurement value of a second measured object that is in the computing device.

The trusted measurement apparatus 803 may be the trusted measurement apparatus 700 in the embodiment shown in FIG. 7.

The second trusted module is configured to store a measurement value of a first measured object.

In this embodiment of this application, the computing device may further include a verification apparatus 803. Alternatively, the computing device may be connected to a verification apparatus located outside the computing device. For example, the independent verification apparatus is a remote verification server.

In this embodiment of this application, the verification apparatus and the remote verification server support the method performed by the verification module in the foregoing embodiments. In an example, the verification apparatus is configured to: obtain the measurement value of the first measured object from the second trusted module; and determine, based on the measurement value of the first measured object, whether the first trusted module or data in the first trusted module is trusted. In another example, the verification apparatus is configured to: obtain the measurement value of the second measured object from the first trusted module; and determine, based on the measurement value of the second measured object, whether the second measured object is trusted.

In this embodiment of this application, the computing device may further include a measurement execution apparatus 804. For example, the trusted measurement apparatus 803 is specifically configured to: obtain an integrity parameter of the first measured object; send the integrity parameter of the first measured object to the measurement execution apparatus; and receive the measurement value of the first measured object sent by the measurement execution apparatus. The measurement execution apparatus 804 is configured to: receive the integrity parameter of the first measured object; and generate the measurement value of the first measured object based on the integrity parameter of the first measured object. In another embodiment of this application, the measurement execution apparatus 804 may be further configured to receive an integrity parameter of the second measured object; and generate the measurement value of the second measured object based on the integrity parameter of the second measured object.

In this embodiment of this application, the computing device may include one or more trusted measurement apparatuses. In an example, the computing device includes a first trusted measurement apparatus and a second trusted measurement apparatus. The first trusted measurement apparatus is configured to obtain the measurement value of the second measured object and extend the measurement value of the second measured object to a register of the first trusted module. The second trusted measurement apparatus may be configured to perform steps S101 and S 102 in the foregoing embodiment. For details, refer to the descriptions in the foregoing embodiment.

In this embodiment of this application, the computing device may alternatively be a virtual machine.

During actual application, a trusted measurement system may include the first trusted module, the second trusted module, and the trusted measurement apparatus in the computing device in the foregoing embodiment. In a possible implementation, the system may further include a measurement execution apparatus. In a possible implementation, the system may include a verification apparatus located in the computing device or a remote verification server independent of the computing device.

For details and technical effects of other technical solutions in this embodiment of this application, refer to descriptions in other embodiments of this application.

This application provides a trusted measurement program. When being executed, the trusted measurement program is for the trusted measurement method according to any one of the foregoing embodiments.

This application provides a computer-readable storage medium. The computer-readable storage medium stores instructions, and the instructions may be run by one or more processors on a processing circuit. When the instructions are run on a computer, the computer is enabled to perform the method according to any one of the possible implementations in the foregoing embodiments.

For details and technical effects of other technical solutions in this embodiment of this application, refer to descriptions in other embodiments of this application.

All or a part of the foregoing embodiments may be implemented by using software, hardware, firmware, or any combination thereof. When software is used to implement embodiments, all or a part of the embodiments may be implemented in a form of a computer program product. The computer program product includes one or more computer instructions. When the computer program instructions are loaded and executed on a computer, all or a part of the procedures or functions according to this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive)), or the like.

**Claims**

1. A trusted measurement method, comprising:

    obtaining a measurement value of a first measured object in a computing device, wherein the measurement value of the first measured object is for determining whether a firmware-based first trusted module in the computing device is trusted, and the first trusted module is configured to store a measurement value of a second measured object that is in the computing device; and
    sending the measurement value of the first measured object to a hardware-based second trusted module.

2. The method according to claim 1, wherein the first measured object comprises at least one of the following: the first trusted module or data in the first trusted module.

3. The method according to claim 1 or 2, wherein the measurement value of the second measured object is stored in a first register of the first trusted module through an extend operation; and
    the measurement value of the first measured object is stored in a second register of the second trusted module through the extend operation.

4. The method according to any one of claims 1 to 3, wherein

    the first trusted module is a firmware-based trusted platform module fTPM, and the measurement value of the second measured object is stored in a platform configuration register PCR of the first trusted module; and/or
    the second trusted module is a discrete trusted platform module dTPM or an integrated trusted platform module, and the measurement value of the first measured object is stored in a PCR of the second trusted module.

5. The method according to any one of claims 1 to 4, wherein the first measured object comprises the measurement value of the second measured object; and
before the obtaining a measurement value of a first measured object in a computing device, the method further comprises:

obtaining the measurement value of the second measured object, wherein the second measured object comprises at least one of the following: an APP, a process, a program, a log, a database, a file, or data in the computing device; and
sending the measurement value of the second measured object to the first trusted module.

6. The method according to any one of claims 1 to 5, wherein before the obtaining a measurement value of a first measured object in a computing device, the method comprises: detecting that the first measured object changes.

7. The method according to claims 1 to 6, wherein the obtaining a measurement value of a first measured object in a computing device comprises: obtaining one measurement value corresponding to at least two first measured objects.

8. A trusted measurement apparatus, comprising:

an obtaining module, configured to obtain a measurement value of a first measured object in a computing device, wherein the measurement value of the first measured object is for determining whether a firmware-based first trusted module in the computing device is trusted, and the first trusted module is configured to store a measurement value of a second measured object that is in the computing device; and
a sending module, configured to send the measurement value of the first measured object to a hardware-based second trusted module.

9. The apparatus according to claim 8, wherein the first measured object comprises at least one of the following: the first trusted module or data in the first trusted module.

10. The apparatus according to claim 8 or 9, wherein the measurement value of the second measured object is stored in a first register of the first trusted module through an extend operation; and
the measurement value of the first measured object is stored in a second register of the second trusted module through the extend operation.

11. The apparatus according to any one of claims 8 to 10, wherein

the first trusted module is a firmware-based trusted platform module fTPM, and the measurement value of the second measured object is stored in a platform configuration register PCR of the first trusted module; and/or
the second trusted module is a discrete trusted platform module dTPM or an integrated trusted platform module, and the measurement value of the first measured object is stored in a PCR of the second trusted module.

12. The apparatus according to any one of claims 8 to 11, wherein

the obtaining module is further configured to: before obtaining the measurement value of the first measured object in the computing device, obtain the measurement value of the second measured object, wherein the first measured object comprises the measurement value of the second measured object, and the second measured object comprises at least one of the following: an APP, a process, a program, a log, a database, a file, or data in the computing device; and
the sending module is further configured to send the measurement value of the second measured object to the first trusted module.

13. The apparatus according to any one of claims 8 to 12, wherein the obtaining module is further configured to: after detecting that the first measured object changes, perform a step of obtaining the measurement value of the first measured object in the computing device.

14. The apparatus according to any one of claims 8 to 13, wherein the obtaining module is specifically configured to obtain one measurement value corresponding to at least two first measured objects.

**15.** A computing device, wherein the computing device comprises a firmware-based first trusted module of the computing device, a hardware-based second trusted module, and the trusted measurement apparatus according to any one of claims 8 to 14, wherein

the first trusted module is configured to store a measurement value of a second measured object that is in the computing device; and
the second trusted module is configured to store a measurement value of a first measured object.

**16.** The computing device according to claim 15, wherein the computing device further comprises:
a verification apparatus, configured to: obtain the measurement value of the first measured object from the second trusted module; and determine, based on the measurement value of the first measured object, whether the first measured object is trusted.

**17.** The computing device according to claim 15 or 16, wherein the computing device further comprises a measurement execution apparatus, wherein

the trusted measurement apparatus is specifically configured to: obtain an integrity parameter of the first measured object; send the integrity parameter of the first measured object to the measurement execution apparatus; and receive the measurement value of the first measured object sent by the measurement execution apparatus; and
the measurement execution apparatus is configured to: receive the integrity parameter of the first measured object; and generate the measurement value of the first measured object based on the integrity parameter of the first measured object.

**18.** A trusted measurement program, wherein when being executed, the trusted measurement program is for implementing the trusted measurement method according to any one of claims 1 to 7.

Obtain a measurement value of a first measured object in a computing device, where the measurement value of the first measured object is for determining whether a firmware-based first trusted module in the computing device is trusted, and the first trusted module is configured to store a measurement value of a second measured object that is in the computing device

S101

Send the measurement value of the first measured object to a hardware-based second trusted module

S102

FIG. 1

## Non-secure world

### User application

| Local application | KMC client |

| Measurement initiation | global platform trusted execution environment |

### Common OS

TPM driver

TEE driver

## Secure world

### TEE application

| TA (KMC) | TA (DIM) | TA (fTPM) |

Global platform trusted execution environment client API

TPM command

| PCR | X509/R |

| SH | AES |

Subsystem

Security monitor

### TEE OS

| TEE Core | TEE function/ database (encrypted) |

HAL

Software

---

Hardware

### SOC

ARM CPU Core

dTPM

TrustZone

Encryption/ Decryption engine

Hardware random number

| eFuse | HUK |

Service processing engine

FIG. 2

A system extension function process may be independently
started and terminated and occupies a separate PCR

| Basic OS process | | System extension function process 1 | | System extension function process 2 | ... | System extension function process n |

Write into a
PCR of a
dTPM through
an extend
operation

Use the dTPM to record a
measurement value of an fTPM

| dTPM | | fTPM |

A quantity of PCRs of the fTPM
may be defined by software, to
meet requirements

Complex system software scenario

FIG. 3

Basic measured object:
measurement of a boot process

Extended measured object: Each measured object is independent
and requires independent measurement or dynamic measurement

| Basic measured object |

| Extended measured object 1 |

| Extended measured object 2 |

...

| Extended measured object n |

Write into a
PCR of a dTPM
through an
extend operation

Write into a
software PCR of
a fTPM through
the extend
operation

Use the dTPM to record
a measurement value of
an fTPM

| dTPM |

| fTPM |

A quantity of PCRs of the
fTPM may be defined by
software, to meet requirements

FIG. 4

FIG. 5

600

Obtaining module
601

Sending module
602

FIG. 6

700

Processor
701

Interface
703

Bus 704

Memory
702

FIG. 7

800

Measurement
execution apparatus
803

Trusted
measurement
apparatus 600

First trusted module
801

Second trusted
module 802

Verification
apparatus 804

FIG. 8

## INTERNATIONAL SEARCH REPORT

| | International application No. |
|---|---|
| | **PCT/CN2021/080810** |

| A. CLASSIFICATION OF SUBJECT MATTER |
|---|
| G06F 21/57(2013.01)i;  G06F 21/51(2013.01)i |
| According to International Patent Classification (IPC) or to both national classification and IPC |

| B. FIELDS SEARCHED |
|---|
| Minimum documentation searched (classification system followed by classification symbols) |
| G06F |
| Documentation searched other than minimum documentation to the extent that such documents are included in the fields searched |
| |
| Electronic data base consulted during the international search (name of data base and, where practicable, search terms used) |
| CNPAT, WPI, EPODOC, CNKI, IEEE: 可信, 度量, 第一, 第二, 扩展, 寄存器, 固件, 硬件, 离散, 进程, 应用程序, 可信平台, trust, measure, first, second, extend, register, firmware, hardware, discrete, process, application, APP, TPM |

| C. | DOCUMENTS CONSIDERED TO BE RELEVANT | |
|---|---|---|
| Category* | Citation of document, with indication, where appropriate, of the relevant passages | Relevant to claim No. |
| X | CN 107451479 A (INSPUR (BEIJING) ELECTRONIC INFORMATION INDUSTRY CO., LTD.) 08 December 2017 (2017-12-08)<br>description paragraphs 0058-0100 | 1-18 |
| A | CN 105389513 A (HUAWEI TECHNOLOGIES CO., LTD.) 09 March 2016 (2016-03-09)<br>entire document | 1-18 |
| A | CN 106127056 A (LANGCHAO ELECTRONIC INFORMATION INDUSTRY CO., LTD.)<br>16 November 2016 (2016-11-16)<br>entire document | 1-18 |
| A | CN 102436566 A (AUTOMATION RESEARCH AND DESIGN INSTITUTE OF METALLURGICAL INDUSTRY) 02 May 2012 (2012-05-02)<br>entire document | 1-18 |
| A | US 2019114431 A1 (BAIDU USA LLC.) 18 April 2019 (2019-04-18)<br>entire document | 1-18 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 June 2021** | **16 June 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

International application No.

**PCT/CN2021/080810**

| Patent document cited in search report | | | Publication date (day/month/year) | Patent family member(s) | | | Publication date (day/month/year) |
|---|---|---|---|---|---|---|---|
| CN | 107451479 | A | 08 December 2017 | None | | | |
| CN | 105389513 | A | 09 March 2016 | None | | | |
| CN | 106127056 | A | 16 November 2016 | None | | | |
| CN | 102436566 | A | 02 May 2012 | None | | | |
| US | 2019114431 | A1 | 18 April 2019 | CN | 109669734 | A | 23 April 2019 |

**EP 4 116 851 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010246265